# EUROPEAN PATENT SPECIFICATION

(11) **EP 3 489 019 B1**
(45) Date of publication and mention of the grant of the patent: **30.06.2021**
(21) Application number: 18815930.5
(22) Date of filing: 25.07.2018
(51) Int. Cl.: B29C 64/30, B29C 64/112, B29C 64/393, B33Y 30/00, B33Y 50/02, B33Y 40/00

(54) **THREE-DIMENSIONAL PRINTER**
DREIDIMENSIONALER DRUCKER
IMPRIMANTE TRIDIMENSIONNELLE

(30) Priority: 10.08.2017 CN 201710682344
(43) Date of publication of application: 29.05.2019
(73) Proprietor: Shanghai Mi Fang Electronics Ltd, Shanghai 201612 (CN)
(72) Inventor: LAN, He, Shanghai 201612 (CN); SHI, Huancheng, Shanghai 201612 (CN)
(74) Representative: Rössler, Matthias
(86) International application number: PCT/CN2018/097018
(87) International publication number: WO 2019/029361

(56) References cited:
- WO-A1-2015/017579
- CN-A- 103 786 347
- CN-A- 103 786 347
- CN-A- 104 708 810
- CN-A- 105 058 789
- CN-A- 106 426 931
- CN-A- 107 323 089
- CN-U- 203 805 507
- CN-U- 206 048 830
- JP-A- 2004 017 331
- JP-A- 2017 071 067

## Description

### Field of technology

The present invention relates to the field of 3D printing, particularly, a 3D printer.

### Background Art

Print Full Electronic Technology refers to the use of fast, efficient and flexible digital printing inkjet technology to form conductive lines and graphics on the substrate (free of copper foil), or to form the entire printed circuit board process. Previously, electronic systems were produced by following steps: purchasing various devices fabricated in large semiconductor factories, then fabricating the corresponding boards through PCB process, and finally mounting individual devices onto the PCB to form a usable system. Now with the development of new materials such as nano-materials and organic semiconductors, device manufacturing no longer requires high-temperature, vacuum and other conditions that only large factories can afford, and devices can be fabricated in an inexpensive and simple way, which uses full solution processing and printing in an indoor environment.

Currently, R&D printers for scientific market usually include manual replaceable ink cartridges, movable triaxial platforms, inkjet printheads, ink drop observation, surface adsorption, heating devices, etc. However, this kind of printers is not able to automatically multi-layer justify and automatically replace ink cartridges, thus failing to automatically print any more than one layer of devices such as transistors, organic light emitting diodes, etc., or to fabricate electronic systems based on these devices.

WO 2015/017579 A1 relates to a bioprinter that comprises one or printer heads, wherein each printer head comprises a cartridge carrier for receiving and holding a plurality of cartridges. The cartridge carrier rotatable to align a selected cartridge with a drive pathway. Each cartridge comprises contents selected from one or mor of: bioink and support material. The bioprinter comprises further a drive means for dispensing the contents of the selected cartridge; a receiving surface for receiving dispensed contents of the selected cartridge; an actuation means for positioning the one or more printer heads relative to the receiving surface to produce a particular three- dimensional geometry in the dispensed contents of the selected cartridge; and a calibration means for determining the position of: 1) a deposition orifice associated with the selected cartridge, and 2) a print target surface supported by the receiving surface.

CN 105 058 789 A relates to a 3D printer, wherein ink cartridges are arranged on a round plate that is placed above a printing platform. By driving the round plate, the required ink cartridge is used to print an object.

### Summary of the invention

In view of this, the embodiment of the present invention provides a 3D printer to solve the technical problem that multi-layer devices cannot be automatically printed in the prior art.

According to the present invention, a 3D printer according to the appended claim 1 is provided.

Preferably, the 3D printer further comprises an automatic ink cartridge turning device for controlling the printing angle of different ink cartridges to indirectly control the inkjet printing precision of different solution materials.

Preferably, the 3D printer further comprises an automatic cleaning sprayer device for automatically cleaning the printhead during the inkjet printing process.

Preferably, the 3D printer further comprises a printhead ink droplet observation device for feeding back the ink droplet image collected when the printhead flashes to the control component for processing, so as to observe the quality of all the spray orifices of the printhead and optimize the inkjet printing parameters.

Preferably, the control component further comprises devices for driving inkjet printing, driving dispensing/scraping, heating and air pressure response instruction.

Preferably, the printing platform comprises: a heating device for heating moulded inkjet printed material; and/or an vacuum adsorption device for adsorbing moulded inkjet printed material and/or the substrate material; and / or, a printing platform device free of leveling for avoiding tedious steps taken by users to adjust plane parallelism of the printing platform device.

The feeding component further comprises: an auxiliary processing component capable of mutually switching with ink cartridges; and a switching control device for responding to instructions of the control component and switching the auxiliary processing component to the printing platform to complete the corresponding auxiliary processing.

Preferably, the auxiliary processing component comprises one or more of a scratching blade, an ultraviolet sintering head, a dispensing head and an ozone processing head. Preferably, the shape of the auxiliary processing component is the same as the shape of the ink cartridge. In one embodiment, the 3D printer further includes: a camera component disposed on the support component; the printing platform and/or the substrate material is provided with a reference point, and the inkjet printhead position error of the ink cartridge is corrected by the image of the reference point collected by the camera component.

In one embodiment, the feeding component further comprises an inkjet protection device for keeping the interior of the inkjet printhead of the ink cartridge moist.

In one embodiment, the 3D printer further comprises: a machine vision device disposed on the support component for feeding back the collected images to the control component for processing, so as to monitor printing errors occurring during the inkjet printing process; when a printing error is monitored, instruction of the control component is corresponded, and the printing step in which the printing error occurs is corrected in situ or re-executed. Preferably, the machine vision device comprises a CCD camera or a CMOS camera.

Based on the above technical features, the present invention is advantageous in that:
When the 3D printer executes the printing scheme, it automatically switches to the ink cartridge where the corresponding solution material is located according to the current printing step, thereby realizing the fully automatic inkjet printing of the multi-layer structure; when the inkjet printing step is performed according to the printing scheme, the moulded material of this step can be automatically heated, adsorbed, etc.; by controlling the switching auxiliary processing component, the corresponding functions of illumination, cleaning, dispensing, and scratching can also be automatically performed; and the interior of the inkjet printhead can be kept moist to prevent the solution material from drying up and blocking the sprayer; automatically corrects the positional error of the inkjet printhead, monitors printing errors that occur during inkjet printing process, and corrects or re-executes the erroneous printing steps.

### Brief description of the drawings

In combination with figures and embodiments hereunder provided, the above and other objects, features and advantages of the present invention will be illustrated much clearer.
Figure 1 is a schematic diagram of the 3D printer provided by the embodiment of the present invention;
Figure 2 is a schematic diagram of the 3D printer provided in embodiments 1 to 4 of the present invention;
Figure 3 is a top view of the structure of the 3D printer provided in embodiments 1 to 4 of the present invention;

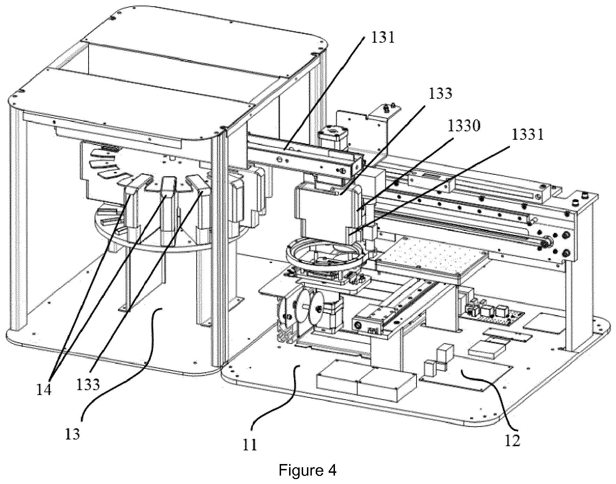

Figure 4 is a schematic diagram of the 3D printer provided in embodiment 5 of the present invention;
Figure 5 is a schematic diagram of the 3D printer provided in embodiment 6 of the present invention;
Figure 6 is a schematic diagram of the 3D printer provided in embodiment 7 of the present invention;
Figure 7 is a schematic diagram of the 3D printer provided in embodiment 8 of the present invention;

### Detailed descriptions of the invention and embodiments

The present invention is expounded below based on embodiments, but the present invention is not limited to only these embodiments. In the following detailed description of the present invention, some specific details are described in detail. The present invention without descriptions of these details can be fully understood by those skilled in the art. In order to avoid obscuring the essence of the invention, well-known methods, procedures, components and circuits are not described in detail.

In addition, skilled artisans will appreciate that drawings provided here are for the purpose of illustration and have not necessarily been drawn to scale.

Also, it should be understood that in the following description, "circuit" refers to a conductive loop formed by connecting at least one component or subcircuit through electrical or electromagnetic connection. When a component or circuit is referred to as "connected to" another component or the component / circuit is "connected" between the two nodes, it can be directly coupled or connected to the other component or intermediate components can be existed, and connections of components can be physical, logical, or a combination thereof. In contrast, when a component is referred to as "directly coupled" or "directly connected" to another component, it is meant that there are no intermediate components.

Unless clearly required by the context otherwise, the words "including", "comprising", and the like in the claims and the specification should be interpreted as meanings of contain rather than exclusive or exhaustive; that is, the meaning of "including but not limited to.

In descriptions of the present invention, it should be understood that the terms "first", "second", and the like are used for descriptive purposes only and are not to be construed as indicating or implying relative importance. Further, in description of the present invention, "a plurality" means two or more unless otherwise stated.

The 3D printer provided in the embodiment of the present invention has a feeding component, which comprises a plurality of ink cartridges respectively storing different solution materials used in inkjet printing different layer structures and automatically switches to the ink cartridges storing corresponding solution materials according to the current printing step when performing the printing scheme to print the corresponding layer structure, enabling the 3D printer to automatically print multi-layer devices according to the printing scheme and making fully automatic 3D printing of complex electronic components, mechanical devices and optical devices a reality.

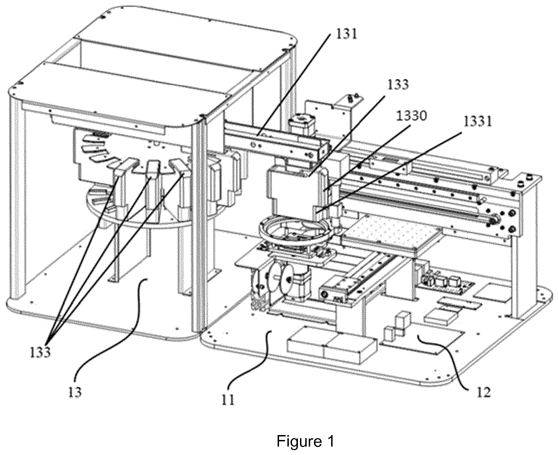

Figure 1 is a schematic diagram of the 3D printer provided by the embodiment of the present invention, and the 3D printer comprises a printing platform 11, a control component 12, and a feeding component 13.

The feeding component 13 includes a switching control device 131 and a plurality of ink cartridges 133. A plurality of ink cartridges 133 are respectively used to store different solution materials used for printing different layer structures. The switching control device 131 switches the ink cartridge storing the corresponding solution material to the printing platform 11 for inkjet printing in accordance with the current printing step. When the printing scheme is executed, the switching control device 131 automatically switches the ink cartridge 133 inside the feeding component 13 according to the control instruction of the control component 12. Therefore, when the solution material is stored in the ink cartridge 133, it is required to be consistent with the material configured in the printing scheme to ensure accurate automatic switch and switch the ink cartridge 133 storing the corresponding solution material to the printing platform 11 to complete the corresponding printing step. The ink cartridge 133 includes an inkstand 1330 and an inkjet printhead 1331, and the solution material is stored in the inkstand 1330.

When the printing scheme is executed, the ink cartridge 133 switched to the printing platform 11 is fixed by the switching control device 131 and moves on the printing platform 11 in response to instructions of the control unit 12. The movement refers to movement within the space represented by the x, y, z 3D coordinate system of the printing platform 11.

In the embodiment, when the 3D printer executes the printing scheme, the ink cartridge storing the corresponding solution material is automatically switched according to the current printing step and thereby multi-layer structure automatic inkjet printing is realized.

For example, when printing an organic semiconductor transistor by using the 3D printer provided in the embodiment of the present invention, first switches to the ink cartridge storing the silver electrode solution to print and form a grid layer on the base material; then performs the step of printing the electrolyte layer, that is, switches to the ink cartridge storing the polyvinylpyrrolidone (PVP) to print and form a electrolyte layer on the electrolyte layer; then switches back to the ink cartridge storing the silver electrode solution to inkjet print and form a source/drain layer on the electrolyte layer; and then switches to the ink cartridge storing the organic semiconductor solution material to inkjet print and form an organic semiconductor layer at the channel between the source and the drain; thereby realizes fully automatic inkjet printing of the organic semiconductor transistor.

### Embodiment 1

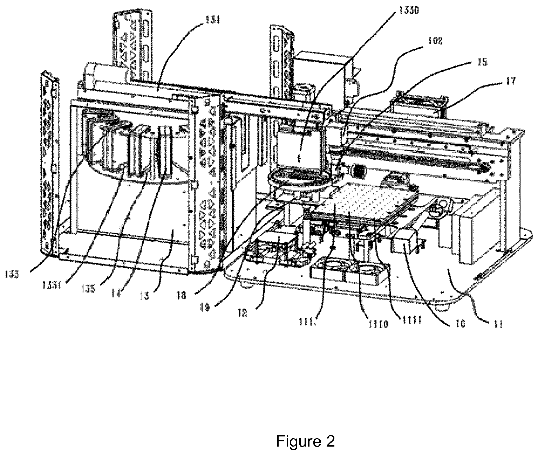

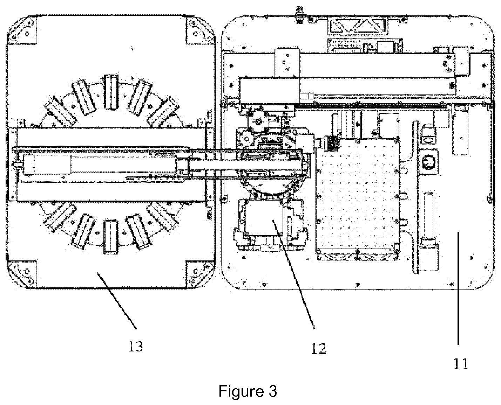

As shown in Figures 2 and 3, the printing platform 11 includes a heating device 111, and/or a vacuum adsorption device 1110 and/or a printing platform device free of leveling 1111 to avoid tedious steps taken by users to adjust plane parallelism of the printing platform device. The heating device 111 is used for heating the printed and moulded material of the inkjet printing step in response to the control instruction of the control component 12 when the inkjet printing step is performed in accordance with the printing scheme. For example, after inkjet printing forms an organic semiconductor layer, it is automatically heated to a temperature of 90 ° C for 30 minutes. The heating device 111 may further have a function of vacuum adsorption, which is also realized by responding to the control instructions of the control component 12 and adsorbs the inkjet printed and moulded material onto the surface of the heating device 111.

As shown in FIG. 2, the 3D printer may further include an automatic cleaning sprayer device 19 for automatically cleaning the printhead during the inkjet printing process to keep the printhead clean, non-contaminating and non-blocking, so as to ensure printing accuracy.

In a second embodiment, as shown in FIG. 2, the 3D printer may further include an automatic ink cartridge turning device 18 for controlling printing angles of different ink cartridges to indirectly control the inkjet printing accuracy of different solution materials.

In a third embodiment, as shown in FIG. 2, the 3D printer may further include a printhead ink droplet observation device 16 that feeds back the ink droplet image collected when the printhead flashes to the control component for processing to observe quality of all the spray orifices of the printhead, and to optimize the inkjet parameters such as waveform, voltage, pressure, etc., and select the better spray orifice for inkjet printing to improve print quality.

In a fourth embodiment, as shown in FIG. 2, the 3D printer may further include an environment purification device 17 that removes PM 2.5 and odor in the printer to improve print quality and protect the environment.

### Embodiment 5

In response to the instruction of the control component 12, the switching control device 131 switches the corresponding auxiliary processing component 14 to the printing platform 11 in accordance with the preset auxiliary processing for the printed and moulded material in each step of the printing scheme to complete the corresponding auxiliary processing.

Auxiliary processing includes treatment with light, gas, scraping, dispensing, and the like. For example, after a photosensitive resin layer is formed by the inkjet printing, irradiation with ultraviolet light is used to rapidly cure the photosensitive resin layer; when an organic light emitting diode is formed by the inkjet printing, the sprayer for controlling the printhead automatically sprays organic semiconductor solution on the indium tin oxide (ITO) electrode, then controls the scratching blade to scratch on the ITO electrode to form an organic semiconductor layer, and then controls the dispensing head to print and form a liquid metal layer; after the inkjet printing of the multilayer device, the device is cleaned by using a gas such as ozone. The auxiliary processing component 14 comprises one or more of a scratching blade, an ultraviolet sintering head, a dispensing head and an ozone processing head. By controlling the switching of the auxiliary processing component 14, each of the corresponding auxiliary processing functions can also be fully automated. Preferably, the shape of the auxiliary processing component 14 is the same as that of the ink cartridge 133, so that the feeding component 13 has the same specifications for storing the ink cartridge 133 and the auxiliary processing component 14 and makes it easy to switch between the ink cartridge 133 and the auxiliary processing component 14.

### Embodiment 6

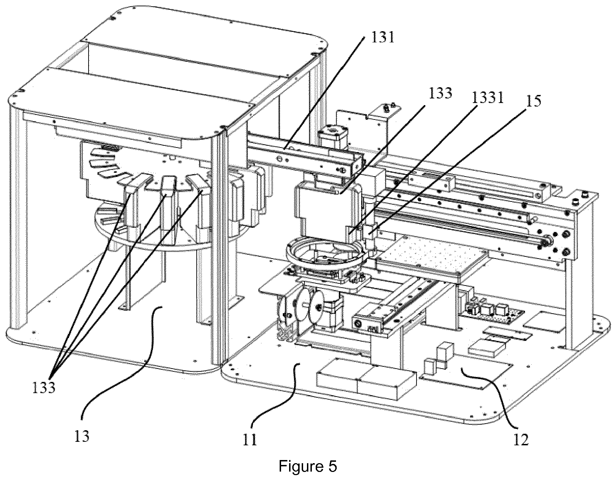

As shown in FIG. 5, the 3D printer may further include a camera component 15 disposed on the support component of the printing platform 11. The camera component 15 can be a conventional camera coupled to the control component 12 to transmit the captured image back to the control component 12 for analysis. The printing platform 11 is provided with one or more reference points for correcting the position error of the inkjet printhead 1331 of the ink cartridge 133.

After a printing step is executed, the inkjet printhead 1331 will return to the original position, the camera component 15 captures the image of the reference point of the printing platform 11 and returns it to the control component 12 for analysis to determine if the position where the inkjet printhead 1331 returns is in error with the standard initial position. If the control component 12 determines that there is an error, the position error of the inkjet printhead 1331 is corrected according to the preset automatic correction scheme, and the inkjet printhead 1331 is automatically corrected to the standard initial position, thereby making the 3D printer implements automatically multi-layer justify to ensure the accuracy of the automated multi-layer printing process.

### Embodiment 7

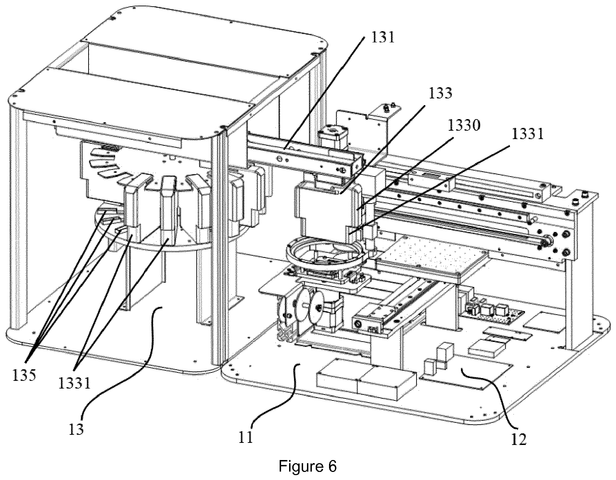

As shown in FIG. 6, the feeding component 13 further includes an inkjet protection device 135, which keeps the inside of the inkjet printhead 1331 of the ink cartridge 133 moist to prevent the solution material from drying up and blocking the spryer to affect the inkjet printing effect or to make the inkjet printing unable to proceed. For example, at the corresponding position where the ink cartridge 133 is stored, a storage type automatic shrinking and sealing device is provided at the ink jet printhead 1331 to prevent the solution material from solidifying and drying inside the inkjet printhead 1331.

### Embodiment 8

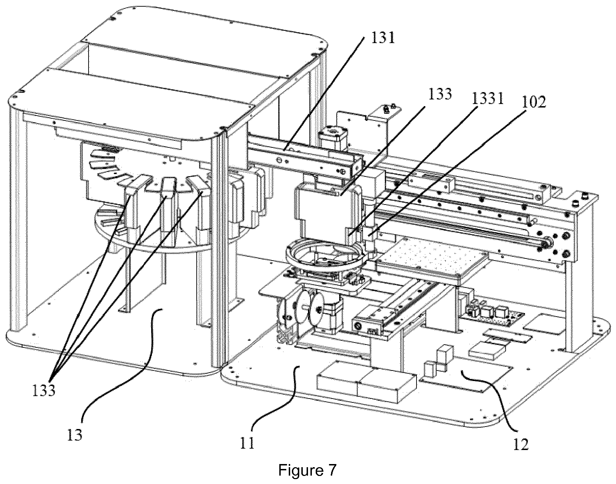

As shown in FIG. 7, the 3D printer may further include a machine vision device 102. The machine vision device 102 takes the printing process of the inkjet printhead 1331 as a detection object, and feeds the image back to the control component 12 for processing to monitor printing errors occurring during the inkjet printing process. The machine vision device 102 includes a camera and a capture card that transmits images captured by the camera back to the control component 12.

The control component 12 converts transmitted signal into a digital signal according to the pixel distribution, the brightness, the color, and the like, and performs various operations on the digital signal to extract the image features of the detected object, such as area, number, position, length, etc., and then outputs the results according to the preset allowable degree and other process conditions, including size, angle, number, pass/fail, presence/absence, etc., to realize the automatic recognition function of the printing process. When a printing error is monitored, in response to the control instruction of the control component 12, the inkjet printhead 1331 corrects the original printing step in which the printing error occurred in accordance with the preset correction step, or re-executes the printing step in which the printing error occurs.

The camera of the machine vision device 102 may be a Charge Coupled Device (CCD) camera or a Complementary Metal Oxide Semiconductor (CMOS) camera.

## Claims

1. A 3D printer, comprising:
a printing platform (11);
a feeding component (13) for switching ink cartridges (133) containing different solution materials to the printing platform (11) for inkjet printing;
and a control component (12) for controlling movement of the ink cartridge (133) switched to the printing platform (11) on the printing platform (11);
wherein the feeding component (13) comprises:
a plurality of ink cartridges (133) for respectively storing different solution materials;
and a switching control device (131) for responding to the instruction of the control component (12) and switching the ink cartridge (133) containing corresponding solution material to the printing platform (11) according to the current printing step, **characterised in that** the feeding component further comprises:
an auxiliary processing component (14) capable of mutually switching with ink cartridges (133);
and **in that** the switching control device (131) is configured for responding to instructions of the control component (12) and for
switching the auxiliary processing component (14) to the printing platform (11) to complete the corresponding auxiliary processing.

2. The 3D printer according to **claim 1,** wherein the control component (12) further comprises devices for driving inkjet printing, driving dispensing and / or scraping, heating and air pressure response instruction.

3. The 3D printer according to **claim 1 or claim 2,** wherein the printing platform (11) comprises:
a heating device (111) for heating moulded inkjet printed material; and/or,
an vacuum adsorption device (1110) for adsorbing moulded inkjet printed material and/or the substrate material; and / or, a printing platform device (1111).

4. The 3D printer according to **claim 3,** wherein the printing platform device (1111) is configured to keep the printing platform (11) free of leveling to avoid adjustment of plane parallelism of the printing platform (11).

5. The 3D printer according to one of **claims** 1-4, wherein the auxiliary processing component (14) comprises one or more of a scratching blade, an ultraviolet sintering head, a dispensing head and an ozone processing head.

6. The 3D printer according to **claim 5,** wherein the shape of the auxiliary processing component is the same as the shape of the ink cartridge.

7. The 3D printer according to **one of claims 1-6,** wherein the 3D printer further includes:
a camera component (15) disposed on the support component; the printing platform (11) and/or
the substrate material is provided with a reference point, and the inkjet printhead (1331) position error of the ink cartridge (133) is corrected by the image of the reference point collected by the camera component (15).

8. The 3D printer according to one of claims 1-7, wherein the feeding component (13) further comprises:
an inkjet protection device (135) for keeping the interior of the inkjet printhead (1331) of the ink cartridge (133) moist.

9. The 3D printer according to **one of claims 1-8,** wherein the 3D printer further comprises:
a machine vision device (102) disposed on the support component for feeding back the collected images to the control component (12) for processing, so as to monitor printing errors occurring during the inkjet printing process; when a printing error is monitored, instruction of the control component is (12) corresponded, and the printing step in which the printing error occurs is corrected in situ or re-executed.

10. The 3D printer according to **one of claims 1-9,** wherein the 3D printer further comprises:
a printhead ink droplet observation device (16) disposed on the support component for feeding back the ink droplet image collected when the printhead flashes to the control component (12) for processing, so as to observe the quality of all the spray orifices of the printhead and optimize the inkjet printing parameters.

11. The 3D printer according to **one of claims 1-10,** wherein the 3D printer further comprises:
an automatic ink cartridge turning device (18) disposed on the support component for controlling the printing angle of different ink cartridges (133) and controlling the inkjet printing precision of different solution materials;
when the ink cartridge (133) is replaced, in response to the instruction of the control component (12), the step of automatically executed turning printing angle of ink cartridges (133) is set according to the properties of the different solution materials.

12. The 3D printer according to **one of claims 9-11,** wherein the machine vision device (102) comprises a CCD camera or a CMOS camera.

13. The 3D printer according to **one of claims 1-12,** wherein the 3D printer further comprises:
an automatic cleaning sprayer device (19) for automatically cleaning the printhead during the inkjet printing process.

14. The 3D printer according to **one of claims 1-13,** wherein the 3D printer further comprises:
an environment purification device (17) that removes odor and fine particles with a diameter of 2.5 micrometers or less.

## Patentansprüche

1. Ein 3D-Drucker, umfassend:
eine Druckplattform (11);
eine Zuführkomponente (13) zum Wechseln von Tintenpatronen (133), die unterschiedliche Lösungsmaterialien enthalten, auf der Druckplattform (11) für den Tintenstrahldruck;
und eine Steuerungskomponente (12) zum Steuern der Bewegung der Tintenpatrone (133), die auf die Druckplattform (11) auf der Druckplattform (11) gewechselt wurde;
wobei die Zuführkomponente (13) umfasst:
eine Vielzahl von Tintenpatronen (133) zum jeweiligen Speichern unterschiedlicher Lösungsmaterialien;
und eine Wechsel-Steuervorrichtung (131), die auf den Befehl der Steuerungskomponente (12) anspricht und die Tintenpatrone (133), die ein entsprechendes Lösungsmaterial enthält, auf die Druckplattform (11) wechselt,
entsprechend dem aktuellen Z-Schritt des Druckes, **dadurch gekennzeichnet, dass** die Zuführkomponente ferner umfasst:
eine Hilfsverarbeitungskomponente (14), die zum gegenseitigen Wechseln der Tintenpatronen (133) in der Lage ist;
und dadurch, dass die Wechsel-Steuervorrichtung (131) zur Beantwortung der Instruktionen der Steuerungskomponente (12) konfiguriert ist und zum Schalten der Hilfsverarbeitungskomponente (14) auf die Druckplattform (11), um die jeweilige Hilfsverarbeitung zu vervollständigen.

2. Der 3D-Drucker nach Anspruch 1, wobei die Steuerungskomponente (12) ferner Vorrichtungen zum Ansteuern des Tintenstrahldrucks, zum Ansteuern des Dispensierens und/oder des Schabens, Heizens und Luftdruck-Instruktion.

3. Der 3D-Drucker nach Anspruch 1 oder Anspruch 2, wobei die Druckplattform (11) umfasst:
eine Heizvorrichtung (111) zum Erwärmen von geformtem tintenstrahlgedrucktem Material; und/oder eine Vakuumansaugvorrichtung (1110) zum Ansaugen von geformtem tintenstrahlgedrucktem Material und/oder Substratmaterial; und/oder eine Druckplattformvorrichtung (1111).

4. Der 3D-Drucker nach Anspruch 3, wobei die Druckplattformvorrichtung (1111) konfiguriert ist, um die Druckplattform (11) nivellierungsfrei zu halten, um die Justage der Ebenen-Parallelität der Druckplattform (11) zu vermeiden.

5. Der 3D-Drucker nach einem der Ansprüche 1 - 4, wobei die Hilfsverarbeitungskomponente (14) eine oder mehrere der folgenden Komponenten umfasst: Kratzklingen, einen Ultraviolett-Sinterkopf, einen Dosierkopf und einen Ozonverarbeitungskopf.

6. Der 3D-Drucker nach Anspruch 5, wobei die Form der Hilfsverarbeitungskomponente die gleiche ist wie die Form der Tintenpatrone.

7. Der 3D-Drucker nach einem der Ansprüche 1 - 6, wobei der 3D-Drucker ferner umfasst:
eine Kamerakomponente (15), die an der Trägerkomponente angeordnet ist; die Druckplattform (11) und/oder das Trägermaterial versehen mit einem Referenzpunkt, und der Positionsfehler der Tintenpatrone (133) des Tintenstrahldruckkopfs (1331) wird durch das Bild des Referenzpunktes, das von der Kamerakomponente (15) erfasst wird, korrigiert.

8. Der 3D-Drucker nach einem der Ansprüche 1 - 7, wobei die Zuführkomponente (13) ferner umfasst:
eine Tintenstrahl-Schutzvorrichtung (135) zum Feuchthalten des Inneren des Tintenstrahl-Druckkopfes (1331) der Tintenpatrone (133).

9. Der 3D-Drucker nach einem der Ansprüche 1 - 8, wobei der 3D-Drucker ferner umfasst:
eine an der Trägerkomponente angeordnete Bildverarbeitungsvorrichtung (102) zur Rückmeldung der gesammelten Bilder an die Steuerungskomponente (12) zur Verarbeitung, um während des Tintenstrahl-Druckvorganges auftretende Druckfehler zu erkennen; wenn ein Druckfehler erkannt wird, wird der Anweisung der Steuerungskomponente (12) entsprochen, und der Druckschritt, bei dem der Druckfehler auftritt, an Ort und Stelle korrigiert oder erneut ausgeführt.

10. Der 3D-Drucker nach einem der Ansprüche 1-9, wobei der 3D-Drucker ferner umfasst:
eine an der Trägerkomponente angeordnete Vorrichtung zur Beobachtung der Druckkopf-Tintentröpfchen (16) zur Rückmeldung der beim Sprühen des Druckkopfes gesammelten Tintentröpfchen-Bilder an die Steuerungskomponente (12) zur Verarbeitung, um die Qualität aller Sprühöffnungen des Druckkopfes zu überwachen und die Tintenstrahl-Druckparameter zu optimieren.

11. Der 3D-Drucker nach einem der Ansprüche 1 - 10, wobei der 3D-Drucker ferner umfasst:
eine an der Trägerkomponente angeordnete automatische Tintenpatronen-Drehvorrichtung (18), zur Steuerung des Druckwinkels verschiedener Tintenpatronen (133) und zur Steuerung der Präzision des Tintenstrahldrucks bei verschiedenen Lösungsmaterialien;
wenn die Tintenpatrone (133) als Reaktion auf die Anweisung der Steuerungskomponente (12) getauscht wird, wird der Schritt des automatisch ausgeführten Einstellens des Druckwinkels der Tintenpatronen (133) entsprechend den Eigenschaften der verschiedenen Lösungsmaterialien eingestellt.

12. Der 3D-Drucker nach einem der Ansprüche 9-11, wobei die Bildverarbeitungsvorrichtung (102) eine CCD-Kamera oder eine CMOS-Kamera umfasst.

13. Der 3D-Drucker nach einem der Ansprüche 1 - 12, wobei der 3D-Drucker ferner umfasst:
eine automatische Reinigungssprühvorrichtung (19) zur automatischen Reinigung des Druckkopfes während des Tintenstrahl-Druckprozesses.

14. Der 3D-Drucker nach einem der Ansprüche 1 - 13, wobei der 3D-Drucker ferner umfasst:
eine Reinigungsvorrichtung für die Umwelt (17), die Gerüche und feine Partikel mit einem Durchmesser von 2,5 Mikrometern oder weniger entfernt.

## Revendications

1. Imprimante 3D, comprenant :
une plate-forme d'impression (11) ;
un composant d'alimentation (13) destiné à permuter des cartouches d'encre (133) contenant différents matériaux de solution et les amener jusqu'à la plate-forme d'impression (11) pour l'impression à jet d'encre ;
et un composant de commande (12) destiné à commander le déplacement de la cartouche d'encre (133) amenée jusqu'à la plate-forme d'impression (11) sur la plate-forme d'impression (11) ;
dans lequel le composant d'alimentation (13) comprend :
une pluralité de cartouches d'encre (133) destinées à stocker respectivement différents matériaux de solution ;
et un dispositif de commande de permutation (131) destiné à répondre à l'instruction du composant de commande (12) et à permuter la cartouche d'encre (133) contenant un matériau de solution correspondant et à l'amener jusqu'à la plate-forme d'impression (11) en fonction de l'étape d'impression en cours, **caractérisée en ce que** le composant d'alimentation comprend en outre :
un composant de traitement auxiliaire (14) pouvant être permuté mutuellement avec des cartouches d'encre (133) ;
et **en ce que** le dispositif de commande de permutation (131) est configuré pour répondre à des instructions du composant de commande (12) et permuter le composant de traitement auxiliaire (14) et l'amener jusqu'à la plate-forme d'impression (11) pour achever le traitement auxiliaire correspondant.

2. Imprimante 3D selon la revendication 1, dans lequel le composant de commande (12) comprend en outre des dispositifs pour commander l'impression à jet d'encre, commander la distribution et/ou le raclage, le chauffage et une instruction de réponse de pression d'air.

3. Imprimante 3D selon la revendication 1 ou la revendication 2, dans lequel la plate-forme d'impression (11) comprend :
un dispositif de chauffage (111) destiné à chauffer un matériau imprimé à jet d'encre moulé ; et/ou
un dispositif d'adsorption à vide (1110) destiné à adsorber un matériau imprimé par jet d'encre moulé et/ou le matériau de substrat ; et/ou un dispositif de plate-forme d'impression (1111).

4. Imprimante 3D selon la revendication 3, dans lequel le dispositif de plate-forme d'impression (1111) est configuré pour maintenir la plate-forme d'impression (11) libre d'une mise à niveau pour éviter un réglage d'un parallélisme de plan de la plate-forme d'impression (11).

5. Imprimante 3D selon l'une des revendications 1 à 4, dans lequel le composant de traitement auxiliaire (14) comprend un ou plusieurs éléments parmi une lame de grattage, une tête de frittage aux ultraviolets, une tête de distribution et une tête de traitement à l'ozone.

6. Imprimante 3D selon la revendication 5, dans lequel la forme du composant de traitement auxiliaire est identique à la forme de la cartouche d'encre.

7. Imprimante 3D selon l'une des revendications 1 à 6, l'imprimante 3D comportant en outre :
un composant de caméra (15) disposé sur le composant de support ; la plate-forme d'impression (11) et/ou le matériau de substrat est doté d'un point de référence, et
une erreur de position de la tête d'impression à jet d'encre (1331) de la cartouche d'encre (133) est corrigée par l'image du point de référence collectée par le composant de caméra (15).

8. Imprimante 3D selon l'une des revendications 1 à 7 dans lequel le composant d'alimentation (13) comprend en outre :
un dispositif de protection de jet d'encre (135) destiné à maintenir humide l'intérieur de la tête d'impression à jet d'encre (1331) de la cartouche d'encre (133).

9. Imprimante 3D selon l'une des revendications 1 à 8, l'imprimante 3D comprenant en outre :
un dispositif de vision artificielle (102) disposé sur le composant de support destiné à renvoyer les images collectées au composant de commande (12) en vue de leur traitement, afin de détecter les erreurs d'impression se produisant durant le processus d'impression à jet d'encre ; quand une erreur d'impression est détectée, l'instruction du composant de commande (12) est adaptée, et l'étape d'impression dans laquelle l'erreur d'impression se produit est corrigée in situ ou exécutée à nouveau.

10. Imprimante 3D selon l'une des revendications 1 à 9, l'imprimante 3D comprenant en outre :
un dispositif d'observation de gouttelettes d'encre de tête d'impression (16) disposé sur le composant de support pour renvoyer l'image de gouttelettes d'encre collectée quand la tête d'impression émet un flash vers le composant de commande (12) en vue de son traitement, de manière à observer la qualité de tous les orifices de pulvérisation de la tête d'impression et optimiser les paramètres d'impression à jet d'encre.

11. Imprimante 3D selon l'une quelconque des revendications 1 à 10, l'imprimante 3D comprenant en outre :
un dispositif de rotation de cartouche d'encre automatique (18) disposé sur le composant de support pour commander l'angle d'impression de différentes cartouches d'encre (133) et commander la précision de l'impression à jet d'encre de différents matériaux de solution ;
quand la cartouche d'encre (133) est remplacée, en réponse à l'instruction du composant de commande (12) l'étape de rotation exécutée automatiquement de l'angle d'impression de cartouches d'encre (133) est réglée en fonction des propriétés des différents matériaux de solution.

12. Imprimante 3D selon l'une quelconque des revendications 9 à 11, dans lequel le dispositif de vision artificielle (102) comprend une caméra CCD ou une caméra CMOS.

13. Imprimante 3D Imprimante selon l'une quelconque des revendications 1 à 12, dans lequel la plate-forme d'impression (11) comprend en outre : un dispositif de pulvérisation de nettoyage automatique (19) destiné à nettoyer automatiquement la tête d'impression durant le processus d'impression à jet d'encre.

14. Imprimante 3D selon l'une quelconque des revendications 1 à 13, l'imprimante 3D comprenant en outre : un dispositif de purification d'environnement (17) qui élimine les odeurs et les fines particules d'un diamètre de 2,5 micromètres ou moins.
